# FASCICULE DE BREVET EUROPEEN

(11) **EP 3 304 748 B1**
(45) Date de publication et mention de la délivrance du brevet: **06.10.2021**
(21) Numéro de dépôt: 16726612.1
(22) Date de dépôt: 03.06.2016
(51) Int. Cl.: H04B 1/24, H04B 1/3822, B60C 23/04

(54) **TRANSPONDEUR RADIOFREQUENCE POUR PNEUMATIQUE**
HOCHFREQUENZTRANSPONDER FÜR EINEN REIFEN
RADIOFREQUENCY TRANSPONDER FOR A TYRE

(30) Priorité: 03.06.2015 FR 1555048
(43) Date de publication de la demande: 11.04.2018
(73) Titulaire: COMPAGNIE GENERALE DES ETABLISSEMENTS MICHELIN, 63000 Clermont-Ferrand (FR)
(72) Inventeur: DESTRAVES, Julien, 63040 Clermont-ferrand Cedex 9 (FR)
(74) Mandataire: Barascou, Frédéric
(86) Numéro de dépôt international: PCT/EP2016/062694
(87) Numéro de publication internationale: WO 2016/193457

(56) Documents cités:
- US-A- 5 196 845
- US-A1- 2015 083 811

## Description

### Domaine de l'invention

La présente invention concerne un dispositif électronique de radio identification ou transpondeur radio fréquence apte à être fixé sur un objet à identifier subissant, en particulier en service, de fortes sollicitations thermo mécaniques comme un pneumatique.

### Arrière plan technologique

Pour le domaine des dispositifs d'identification RFID (acronyme de Radio Frequency Identification), des transpondeurs radiofréquences sont classiquement utilisées pour l'identification, le suivi et la gestion d'objets. Ces dispositifs permettent une gestion automatisée plus fiable et plus rapide.

Ces transpondeurs radiofréquences sont constitués généralement d'au moins une puce électronique et une antenne formée par une boucle magnétique ou une antenne rayonnante que l'on fixe à l'objet à identifier.

La performance de communication du transpondeur radiofréquence s'exprime par la distance maximale de communication du transpondeur radiofréquence avec un lecteur radiofréquence pour un même signal communiqué au ou par le lecteur radiofréquence.

Dans le cas des produits fortement extensibles comme par exemple les pneumatiques, un besoin existe d'identifier le produit tout au long de son existence depuis sa fabrication jusqu'à son retrait du marché et, en particulier, lors de son usage. Ensuite, afin de faciliter cette tâche, notamment en condition d'usage, une performance de communication élevée est requise qui s'exprime par la possibilité d'interroger le transpondeur radiofréquence à longue distance du produit, plusieurs mètres, par l'intermédiaire d'un lecteur radiofréquence. Enfin, on souhaite que le coût de fabrication d'un tel dispositif soit le plus compétitif possible.

On connait dans l'état de la technique, notamment d'après le document WO 2009/134243 A1, un transpondeur radiofréquence apte à répondre aux besoins des pneumatiques. Ce transpondeur est constitué d'une puce électronique, d'un circuit imprimé sur lequel une puce électronique est électriquement connectée et deux ressorts hélicoïdaux métalliques reliés mécaniquement et électriquement au circuit imprimé formant une antenne rayonnante dipôle. La communication avec le lecteur radiofréquence utilise les ondes radioélectriques et en particulier la bande UHF, acronyme d'Ultra Hautes Fréquences. En conséquence, les caractéristiques des ressorts hélicoïdaux telles que le diamètre du fil, la nature du fil, le pas de l'hélice et la longueur des ressorts sont ajustées à la fréquence de communication choisie.

US-A-5196845 et US2015/083811 sont des autres exemples de l'art antérieur.

Cependant, un tel transpondeur radio fréquence présente des inconvénients. Bien qu'une partie du transpondeur radiofréquence soit extensible de par la géométrie de son antenne, il demeure des zones de fragilité mécanique vis-à-vis des forts niveaux de sollicitation en service. En particulier, les connexions mécaniques des ressorts hélicoïdaux avec le circuit imprimé sont des zones rigides qui constituent des points faibles pour l'endurance du transpondeur radiofréquence.

De plus le procédé de fabrication d'un tel transpondeur radiofréquence est onéreux .En effet, l'accrochage des ressorts hélicoïdaux sur le circuit imprimé est une opération délicate souvent manuelle consistant d'une part à ancrer l'extrémité des ressorts hélicoïdaux tridimensionnels dans l'encoche plane du circuit imprimé et d'autre part à connecter électriquement les ressorts hélicoïdaux sur les pistes de la carte électronique. Cette dernière opération ne peut pas être effectuée à l'aide des procédés classiques de l'industrie électronique.

Enfin, il faut rendre solidaire le transpondeur radiofréquence avec les matériaux élastomères constituant le pneumatique. En particulier, la liaison entre les parties rigides du transpondeur et les produits élastomères peut nécessiter l'emploi de promoteurs d'adhésion spécifiques.

La présente invention porte sur un transpondeur radiofréquence visant à améliorer les performances technico économiques des transpondeurs radio fréquences employés entre autres dans l'industrie du pneumatique.

### Description de l'invention

L'invention porte sur un transpondeur radio fréquence destiné à être intégré à un objet à identifier constitué d'un matériau fortement extensible tel un mélange ou composition élastomère. Ce transpondeur radiofréquence comporte une puce électronique et une antenne rayonnante communiquant avec un lecteur radiofréquence, et est caractérisé en ce qu'il est équipé d'une antenne primaire connectée électriquement à la puce électronique, en ce que l'antenne primaire est couplée électro magnétiquement avec l'antenne rayonnante et en ce que l'antenne rayonnante est un ressort hélicoïdal mono brin constituant un dipôle électrique. L'objet à identifier peut être, par exemple, un pneumatique.

On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

On entend ici par le terme « couplage électromagnétique, », le couplage par rayonnement électromagnétique, c'est-à-dire le transfert sans contact physique d'énergie entre deux systèmes incluant d'une part le couplage inductif et d'autre part le couplage capacitif. L'antenne primaire est alors préférentiellement comprise dans le groupe comprenant : une bobine, une boucle ou un segment de fil ou une combinaison de ces éléments conducteurs.

Ainsi, l'absence de toute connexion mécanique entre l'antenne rayonnante et la puce électronique améliore sensiblement les performances d'endurance du transpondeur radiofréquence selon un objet de l'invention relativement au transpondeur radiofréquence du document cité.

De plus, l'antenne rayonnante, étant déconnectée de tout circuit imprimé, peut être noyée et rendue solidaire dans une masse constituée de mélanges élastomères à l'aide de solutions collants élastomère/métal bien connues de l'homme du métier avec ou sans l'utilisation de promoteur d'adhésion spécifique. Cela réduit, par la même occasion, le coût de mise en œuvre d'un tel transpondeur radiofréquence dans une masse de gomme tel qu'un pneumatique.

Enfin en ayant séparé la partie électronique du transpondeur radio fréquence (constitué de la carte électronique et de l'antenne primaire) et l'antenne rayonnante, il est possible de réaliser indépendamment chaque composant puis de les assembler ensemble lors d'une étape postérieure. Ainsi, on peut utiliser des procédés standards de chaque industrie, électronique et télécommunications ce qui réduit les coûts de fabrication d'un tel transpondeur radio fréquence...

De préférence, l'antenne primaire est une bobine possédant au moins une spire, que la spire soit de forme circulaire, carrée ou rectangulaire.

Pour les gammes de fréquences UHF, on choisira préférentiellement un couplage inductif par l'intermédiaire de deux bobines représentées d'une part le ressort hélicoïdal monobrin et d'autre part la bobine à spire.

Selon un mode de réalisation particulier, l'antenne primaire, ayant un axe de symétrie, est circonscrite dans un cercle dont l'axe de révolution est parallèle à l'axe de l'antenne primaire et dont le diamètre est supérieur ou égal au tiers, et de préférence à la moitié, ou les deux tiers du diamètre intérieur du ressort hélicoïdal de l'antenne rayonnante.

En imposant les dimensions relatives de la spire de l'antenne primaire par rapport aux caractéristiques du ressort hélicoïdal de l'antenne rayonnante, on assure que la distance entre les deux antennes sera inférieure au diamètre de l'antenne primaire dans le cas où l'antenne primaire se situe à l'intérieur de l'antenne rayonnante. Ainsi on optimise le couplage inductif entre les deux antennes et de ce fait la performance de communication du transpondeur radio fréquence en émission et réception.

Selon un mode de réalisation préférentiel, l'axe de révolution de l'antenne rayonnante et l'axe de symétrie de l'antenne primaire sont sensiblement parallèles.

Ici, on entend par le terme sensiblement parallèle que l'angle généré par les directions axiales de chaque antenne est inférieur ou égal à 30 degrés. Dans ce cas, le couplage électromagnétique entre les deux antennes est optimal améliorant notablement les performances de communication du transpondeur radiofréquence.

Préférentiellement, le plan médian de la bobine de l'antenne primaire est sensiblement superposé au plan médian du ressort hélicoïdal de l'antenne rayonnante.

Ici, il convient d'abord de définir le plan médian de la bobine et du ressort hélicoïdal. Par définition, c'est un plan fictif séparant l'objet en deux parties égales. Dans notre cas, ce plan médian est perpendiculaire à l'axe de symétrie de chaque antenne et se situe au centre de la longueur de chaque antenne. Enfin, on entend ici par sensiblement superposé que la distance relative entre les plans médians est inférieure au dixième de la longueur de l'antenne rayonnante.

Ainsi l'intensité du courant électrique étant maximal au centre d'une bobine, le champ magnétique induit par ce courant est aussi maximal au centre de la bobine, on assure ainsi que le couplage inductif entre les deux antennes est optimal améliorant de ce fait la performance de communication du transpondeur radiofréquence.

Selon un mode de réalisation préférentiel, l'antenne rayonnante présente une surface périphérique réelle S située en vis-à-vis de l'antenne primaire qui présente une surface périphérique réelle s située en vis-à-vis de l'antenne rayonnante, le rapport des surfaces S/s est compris entre 3 et 8, de préférence entre 4 et 6.

On entend ici par le terme « surface périphérique réelle », la surface de révolution autour de l'axe de l'antenne passant par au moins un extremum radial de la spire de l'antenne et s'étendant axialement au droit de la spire sur la totalité de la longueur de l'antenne. Et on entend ici par le terme « spire », la partie électriquement conductrice de la spire.

Dans le cas d'une bobine à spires jointives, la surface résultante est un cylindre de rayon égal à l'extremum de l'antenne pris comme référence et de longueur égale à la distance axiale de l'antenne. Dans le cas de l'antenne rayonnante, c'est une surface hélicoïdale d'axe correspondant à l'axe de l'antenne rayonnante dont le pas correspondant au pas de l'antenne rayonnante et de rayon correspondant à la distance radiale de l'extremum pris en référence de la spire élémentaire de l'antenne rayonnante.

Enfin, il faut entendre que l'on ne prend que la surface intérieure ou extérieure réelle des antennes en fonction de la localisation de l'antenne rayonnante par rapport à l'antenne primaire.

Ainsi, le transfert d'énergie entre les deux antennes du transpondeur radiofréquence selon l'invention nécessite, pour obtenir une performance de radiocommunication satisfaisante, une surface d'échange minimale entre les deux antennes.

De préférence, l'antenne primaire étant connectée aux bornes d'une carte électronique comprenant la puce électronique, l'impédance électrique de l'antenne primaire est adaptée à l'impédance électrique de la carte électronique du transpondeur radiofréquence.

On entend par le terme impédance électrique de la carte électronique, l'impédance électrique aux bornes de l'antenne primaire ce qui représente, l'impédance électrique de la carte électronique comprenant au moins une puce électronique et un circuit imprimé sur lequel la puce électronique est connectée.

En réalisant l'adaptation d'impédance de l'antenne primaire à celle de la carte électronique, on optimise le transpondeur radiofréquence à la fréquence de communication en améliorant le gain et en ayant un facteur de forme plus sélectif, une bande passante plus étroite, de la carte électronique. Ainsi les performances de communication du transpondeur radiofréquence sont améliorées pour une même quantité d'énergie transmise au transpondeur radiofréquence. Cela se traduit en particulier par une augmentation de la distance de lecture du transpondeur radiofréquence. Pour le transpondeur radiofréquence dans le document cité, il n'est pas aisé de concevoir l'antenne rayonnante qui d'une part doit satisfaire à la condition d'adaptation d'impédance de la partie électronique et d'autre part doit satisfaire à la condition de résonance électrique pour la transmission des ondes radioélectriques.

L'adaptation d'impédance de l'antenne primaire est obtenue par l'ajustement d'au moins l'une des caractéristiques géométriques de l'antenne primaire comme par exemple, le diamètre du fil, le matériau de ce fil et la longueur du fil.

L'adaptation d'impédance de l'antenne primaire peut être aussi obtenue par l'ajout d'un circuit de transformation d'impédance constitué de composants électroniques additionnels entre l'antenne primaire et le circuit électronique comme par exemple, des filtres à base d'inductance et de capacités et des lignes de transmission.

L'adaptation d'impédance de l'antenne primaire peut aussi être obtenue par la combinaison des caractéristiques de l'antenne primaire et des caractéristiques d'un circuit de transformation d'impédance.

Selon un mode de réalisation particulier, la puce électronique et au moins une partie de l'antenne primaire sont noyées dans un matériau rigide et isolant électriquement tel que, par exemple, de la résine de type époxy haute température. L'ensemble constitue la partie électronique du transpondeur radiofréquence.

Ainsi, on rigidifie la partie électronique comprenant au moins une partie de l'antenne primaire et la puce électronique connectée au circuit imprimé rendant plus fiable les connexions mécaniques entre ses composants vis-à-vis des sollicitations thermo mécaniques de l'objet à identifier.

Cela permet aussi l'industrialisation de la partie électronique du transpondeur radiofréquence indépendamment de l'antenne rayonnante ou de l'objet à identifier. Notamment une miniaturisation du composant électronique comprenant l'antenne primaire et la puce électronique peut être envisagée en utilisant par exemple une micro bobine à spires comme antenne primaire.

Selon un autre mode de réalisation, la partie de l'antenne primaire non noyée dans la masse rigide est revêtue d'un matériau isolant électriquement.

Ainsi, si l'antenne primaire n'est pas entièrement contenue dans la masse rigide et isolante électriquement de la partie électronique, il est utile de l'isoler par l'intermédiaire d'un revêtement dans un matériau isolant électriquement telle une gaine d'isolation de câble électrique.

Selon un mode de réalisation préférentiel, la partie électronique du transpondeur radiofréquence est située à l'intérieur de l'antenne rayonnante.

Ainsi, le couplage électromagnétique est optimisé puisque, d'une part le champ magnétique généré par l'antenne rayonnante est maximal et homogène à l'intérieur du ressort hélicoïdal à l'exception de ses extrémités. De ce fait, la performance de communication du transpondeur radiofréquence est améliorée en émission et réception.

Selon un mode de réalisation particulier, la géométrie de la partie électronique du transpondeur radiofréquence est inscrite dans un cylindre dont le diamètre est inférieur ou égal au diamètre intérieur de l'antenne rayonnante et dont l'axe de révolution est parallèle ou coaxial relativement à l'axe de l'antenne primaire.

La partie électronique ainsi constituée permet dans le cas où celle-ci serait placée à l'intérieur de l'antenne rayonnante d'assurer un pré positionnement optimisé de l'antenne primaire par rapport à l'antenne rayonnante pour améliorer la performance de communication en réception/émission du transpondeur radiofréquence. En effet, on assure mécaniquement que les deux antennes sont parallèles et que la distance les séparant génère un couplage inductif de qualité.

Selon un autre mode de réalisation préférentiel, la partie électronique du transpondeur radiofréquence est située à l'extérieur de l'antenne rayonnante.

Ainsi, le couplage électromagnétique est optimisé puisque le champ magnétique généré par l'antenne primaire est maximal et homogène à l'intérieur de la bobine à l'exception de ses extrémités. La performance de communication du transpondeur radiofréquence est améliorée en émission vers le lecteur radiofréquence. De plus, il est plus aisé alors de positionner des composants électroniques additionnels sur le circuit imprimé comportant la puce électronique qui se retrouve à l'extérieur de l'antenne rayonnante.

Selon un mode de réalisation particulier, la partie électronique du transpondeur radiofréquence présente une cavité cylindrique adaptée pour recevoir l'antenne rayonnante. Et, le diamètre du cercle inscrit dans l'antenne primaire est inférieur à trois fois, de préférence deux fois, le diamètre extérieur de l'antenne rayonnante.

Ainsi, lorsque l'antenne rayonnante est placée à l'intérieur de l'antenne primaire, on assure que le couplage électromagnétique entre l'antenne rayonnante et l'antenne primaire est optimal par le positionnement relatif entre les deux antennes en termes de distance et de parallélisme.

Selon un mode de réalisation particulier, la puce électronique étant connectée électriquement à un circuit imprimé pour constituer la carte électronique, le circuit imprimé comporte un ou plusieurs composants électroniques passifs ou actifs additionnels.

Ces composants électroniques peuvent être par exemple un microprocesseur, une mémoire, une batterie, un capteur de pression, un capteur de température, un accéléromètre. Cela permet d'enrichir les fonctionnalités du transpondeur radiofréquence en multipliant les informations qu'il procure.

L'invention a aussi pour objet un patch d'identification constitué d'un transpondeur radiofréquence noyé dans une masse souple et isolante électriquement de mélanges élastomères.

On entend ici par le terme isolant électriquement que la conductivité électrique du mélange élastomère est en deçà du seuil de percolation des charges conductrices du mélange.

Ainsi, on constitue un patch d'identification qui facilite la mise en place du transpondeur radiofréquence dans des objets à identifier comprenant des parties en matériau de base élastomère. Une couche de gomme de liaison usuelle pourra être employée si nécessaire, pour solidariser le patch d'identification à l'objet à identifier tel un pneumatique.

De plus, les caractéristiques de rigidité et de conductivité électrique du mélange élastomère assurent une insertion mécanique et une isolation électrique de qualité du transpondeur radiofréquence au sein des composants de l'objet à identifier. Ainsi le fonctionnement du transpondeur radiofréquence n'est pas perturbé par l'objet à identifier.

L'invention a aussi pour objet, un procédé de fabrication du transpondeur radiofréquence qui comporte les étapes suivantes :
- on réalise un ressort hélicoïdal de dimension adaptée à la fréquence de communication du signal radioélectrique du transpondeur radiofréquence afin de constituer l'antenne rayonnante du transpondeur radiofréquence,
- on connecte électriquement une puce électronique sur un circuit imprimé afin de constituer une carte électronique,
- on réalise à l'aide d'un fil conducteur une antenne primaire,
- on connecte électriquement l'antenne primaire à la carte électronique,
- on noie au moins une partie de l'antenne primaire et la carte électronique dans une masse rigide et isolante électriquement telle une résine thermodurcissable afin de constituer la partie électronique du transpondeur radiofréquence,
- on positionne par simple enfilement la partie électronique et l'antenne rayonnante de telle façon que, l'antenne primaire possédant un axe de symétrie et un plan médian et l'antenne rayonnante un axe de révolution et un plan médian, les axes des deux antennes sont sensiblement parallèles et les plans médians des deux antennes sont sensiblement superposés.

Ainsi, la fabrication du transpondeur radiofréquence est simplifiée en réalisant séparément la partie électronique et l'antenne rayonnante du transpondeur radiofréquence. De plus, l'étape d'assemblage des deux composants ne nécessite aucune connexion mécanique ou électrique entre les deux composants ce qui réduit drastiquement les coûts de fabrication du transpondeur radiofréquence.

Selon un mode de réalisation particulier un procédé de fabrication selon l'invention comprend une étape de réaliser une antenne primaire de type bobine possédant au moins une spire et comprenant un axe de symétrie qui est circonscrite dans un cercle dont l'axe de révolution est parallèle à l'axe de symétrie et dont le diamètre est supérieur ou égal au tiers du diamètre intérieur de l'antenne rayonnante .

Ces caractéristiques complémentaires concernent une variante de l'antenne primaire permettant un couplage inductif dans la gamme de fréquences des UHF.

Selon un mode de réalisation préférentiel un procédé de fabrication selon l'invention comprend une étape de revêtir la partie d'antenne primaire non noyée dans la masse rigide et isolante électriquement d'un matériau isolant électriquement.

Cette caractéristique est utile pour obtenir un couplage électromagnétique de qualité entre l'antenne rayonnante et l'antenne primaire en empêchant tout contact physique entre les parties conductrices des deux antennes.

De préférence, un procédé de fabrication selon l'invention comprend une étape d'adapter l'impédance électrique de l'antenne primaire à l'impédance électrique de la carte électronique.

Cela permet d'améliorer l'efficacité de l'antenne primaire.

Selon un mode de réalisation préférentiel, un procédé de fabrication comprend une étape d'ajouter un ou plusieurs composants électroniques passifs ou actifs additionnels sur le circuit imprimé équipé de la puce électronique afin de constituer la carte électronique.

Ainsi, les fonctionnalités du transpondeur radio fréquence se trouvent améliorées en introduisant cette étape purement liée à l'industrie électronique dès la conception de la carte électronique.

L'invention a aussi pour objet un procédé de fabrication du patch d'identification dans lequel un transpondeur radiofréquence est incorporé dans une masse d'au moins un mélange élastomère souple et isolant électriquement par un procédé d'injection, de compression ou d'extrusion.

Ainsi, quel que soit l'état de l'élastomère, cru ou réticulé, il est facile d'incorporer le patch d'identification à un objet à identifier, tel un pneumatique, comprenant des produits élastomères en employant si nécessaire des techniques classiques d'adhésion élastomère/élastomère. Cette incorporation peut avoir lieu soit lors de la phase de fabrication de l'objet, comme par exemple au sein d'une ébauche crue d'un pneumatique, et en particulier avant la réticulation ou la vulcanisation des élastomères soit lors d'une étape postérieure au procédé de fabrication de l'objet à identifier comme par exemple directement sur les faces interne ou externe du pneumatique.

### Description brève des dessins

L'invention sera mieux comprise à la lecture de la description qui va suivre dans le cas d'une application à des bandages pneumatiques. Cette application est donnée uniquement à titre d'exemple et faite en se référant aux figures annexées dans lesquelles :
- La figure 1 présente une vue de détail d'une antenne rayonnante selon l'invention ;
- La figure 2 présente une vue en perspective de la partie électronique d'un transpondeur radiofréquence selon l'invention dans une configuration où la partie électronique est destinée à être positionnée à l'intérieur de l'antenne rayonnante ;
- La figure 3 présente une vue en perspective d'un transpondeur radiofréquence selon l'invention dans une configuration où la partie électronique est située à l'intérieur de l'antenne rayonnante ;
- La figure 4 présente une vue en perspective d'un transpondeur radiofréquence selon l'invention dans une configuration où la partie électronique est située à l'extérieur de l'antenne rayonnante ;
- La figure 5 est une vue éclatée d'un patch d'identification ;
- La figure 6 présente un graphe de la puissance électrique transmise à deux transpondeurs radiofréquences selon la bande de fréquence d'observation, et
- La figure 7 est un synoptique d'un procédé de fabrication d'un patch d'identification comprenant un transpondeur radiofréquence selon l'invention.

### Description détaillée de modes de réalisation

Dans ce qui suit, les termes « pneumatique » et « bandage pneumatique » sont employés de façon équivalente et concernent tout type de bandage pneumatique ou non pneumatique (en anglais « tire », « pneumatic tire », « non-pneumatic tire »)

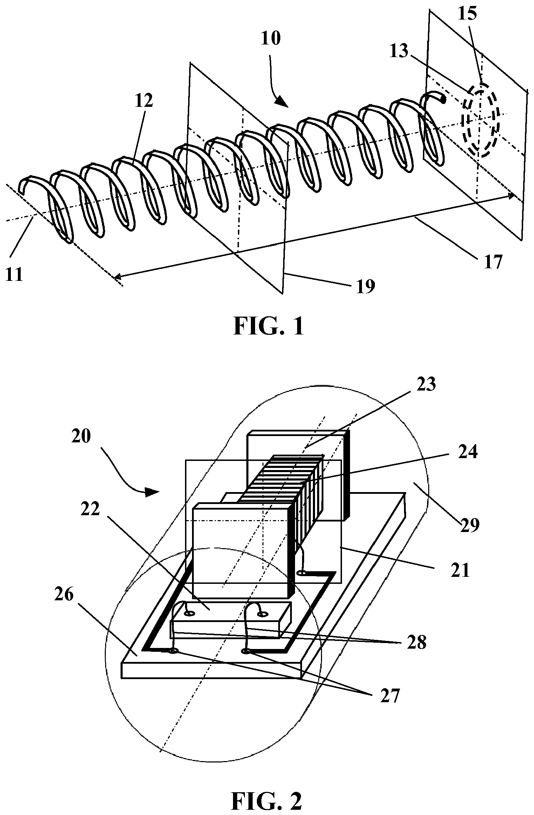

La figure 1 présente une antenne rayonnante 10 constituée d'un fil en acier 12 qui a été déformé plastiquement afin de former un ressort hélicoïdal présentant un axe de révolution 11. Le ressort hélicoïdal est défini tout d'abord par un diamètre d'enroulement du fil revêtu et un pas d'hélice. Ainsi, on détermine précisément des diamètres intérieur 13 et extérieur 15 du ressort hélicoïdal en prenant en comptant le diamètre du fil. La longueur du ressort 17 correspond ici à la demi-longueur d'onde du signal de transmission du transpondeur radiofréquence 1 dans une masse de mélange élastomère. Ainsi on peut définir un plan médian 19 au ressort hélicoïdal perpendiculaire à l'axe de révolution 11 séparant l'antenne rayonnante en deux parties égales. La surface périphérique réelle S de l'antenne rayonnante 10 sera évaluée à l'aide du pas d'hélice, du diamètre du fil d'acier 12, de la longueur 17 de l'antenne rayonnante 10 et, selon le cas, le diamètre intérieur 13 ou le diamètre extérieur 15 du ressort hélicoïdal.

La figure 2 présente la partie électronique 20 d'un transpondeur radiofréquence 1 destiné à une configuration où la partie électronique 20 est située à l'intérieur de l'antenne rayonnante 10. La partie électronique 20 comprend une puce électronique 22 et une antenne primaire 24 connectée électriquement à la puce électronique 22 par l'intermédiaire d'un circuit imprimé 26. L'antenne primaire est ici constituée par une micro bobine CMS (acronyme de Composant Monté en Surface) présentant un axe de symétrie 23. On détermine le plan médian 21 de l'antenne primaire défini par une normale parallèle à l'axe de symétrie 23 de la bobine CMS et séparant la bobine en deux parties égales. La connexion électrique entre les composants sur le circuit imprimé est réalisée à l'aide de pistes en cuivre terminé par des pastilles 27 en cuivre. La connexion électrique des composants sur le circuit imprimé est réalisée à l'aide de la technique dite du « wire bonding » par des fils 28 en or entre le composant et les pastilles 27. L'ensemble constitué du circuit imprimé 26, de la puce électronique 22 et de l'antenne primaire 24 est noyé dans une masse rigide 29 en résine époxy haute température isolante électriquement constituant la partie électronique 20 du transpondeur radiofréquence 1.

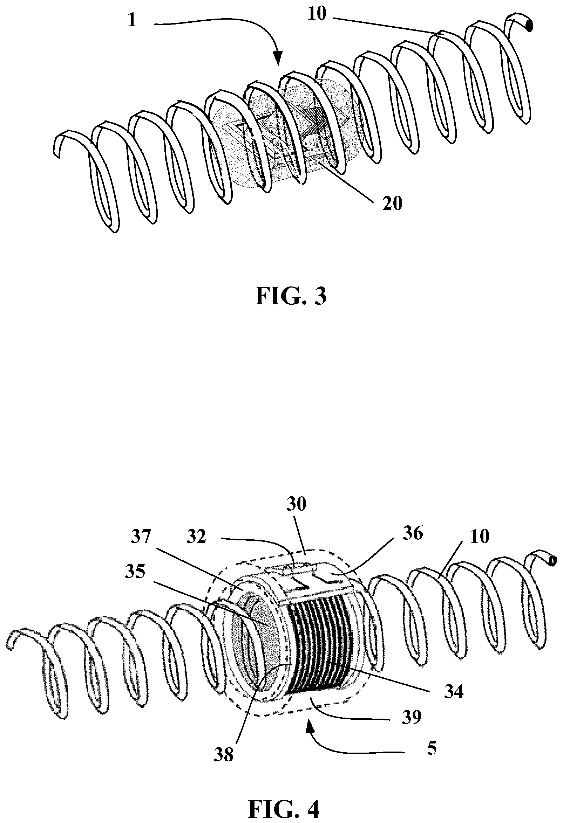

La figure 3 présente un transpondeur radiofréquence 1 dans une configuration où la partie électronique 20 est située à l'intérieur de l'antenne rayonnante 10. La forme géométrique de la partie électronique 20 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve sensiblement superposé au plan médian 19 de l'antenne rayonnante 10.

La figure 4 présente un transpondeur radiofréquence 5 dans une configuration où la partie électronique 30 se trouve à l'extérieur de l'antenne rayonnante 10. La forme géométrique de la partie électronique 30 présente une cavité cylindrique 35 dont le diamètre est supérieur ou égal au diamètre extérieur 15 de l'antenne rayonnante 10. L'enfilement de l'antenne rayonnante 10 dans la cavité cylindrique 35 de la partie électronique s'en trouve ainsi facilité. Le plan médian de l'antenne primaire se trouve sensiblement dans le plan médian de l'antenne rayonnante 10.

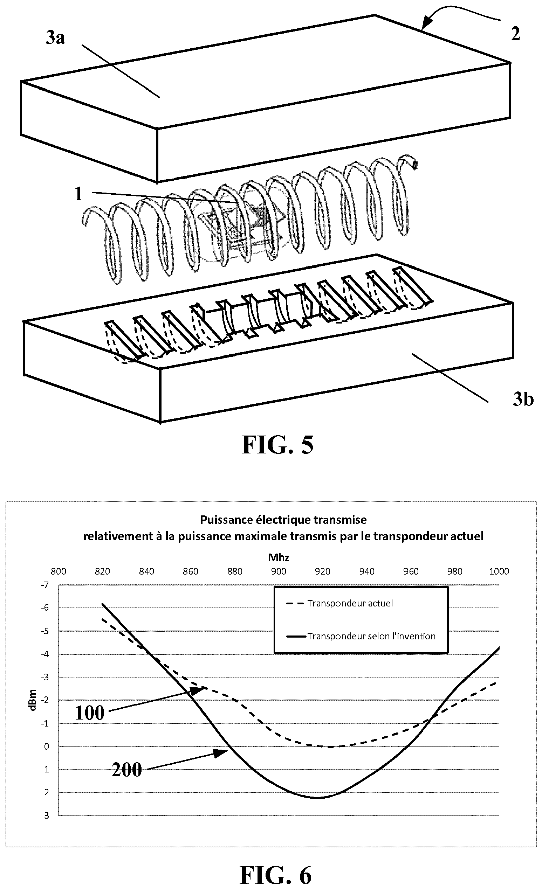

La figure 5 présente un patch d'identification 2 comprenant un transpondeur radiofréquence 1 noyé dans une masse souple 3 en matériau élastomère isolant électriquement représentée par les plaques 3a et 3b. Ici le transpondeur radiofréquence 1 est dans une configuration où la partie électronique 20 est située à l'intérieur de l'antenne rayonnante 10.

La figure 6 est un graphe de la puissance électrique transmise par un transpondeur radiofréquence situé à l'intérieur d'une enveloppe pneumatique de marque Michelin XINCITY de dimension 275/70 R22.5 à un lecteur radiofréquence. Le protocole de mesure employé correspond à la norme ISO/IEC 18046-3 intitulé « Identification Electromagnetic Field Threshold and Frequency Peaks » . Les mesures ont été effectuées pour un balayage en fréquence large et non ponctuellement comme habituellement. L'axe des abscisses représente la fréquence du signal de communication. L'axe des ordonnées est la puissance électrique reçue par le lecteur radiofréquence exprimée en décibel relativement à la puissance électrique maximale transmis par un transpondeur radiofréquence actuel de l'état de l'art. La courbe en pointillé 100 représente la réponse d'un transpondeur radiofréquence selon le document cité. La courbe en continu 200 représente la réponse d'un transpondeur selon l'invention pour un même signal émis par le lecteur radiofréquence. On note un gain de deux décibels en faveur du transpondeur radiofréquence selon l'invention sur la fréquence centrale de communication du lecteur radiofréquence. Le gain reste de l'ordre d'au moins un décibel sur une bande de fréquence élargie autour de la fréquence de communication.

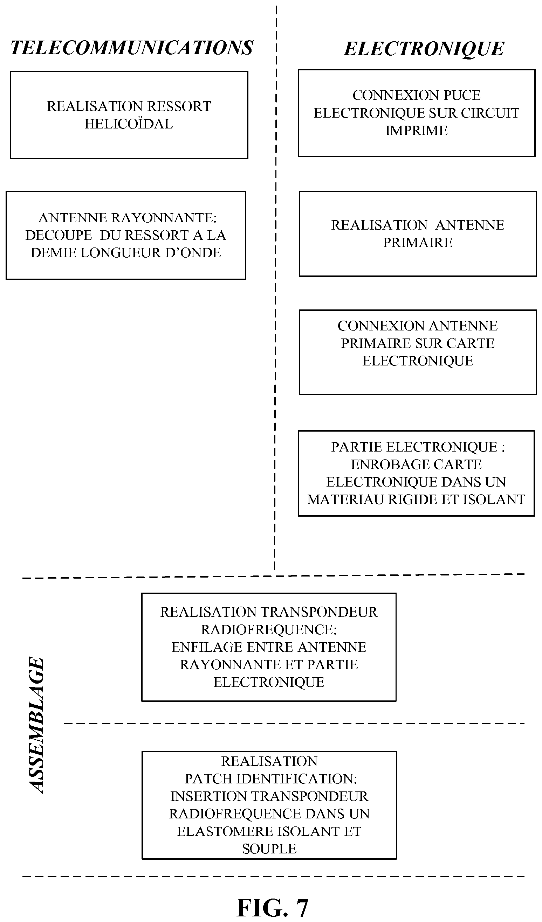

La figure 7 est un synoptique du procédé de fabrication d'un patch d'identification 2 selon l'invention. L'obtention du patch d'identification 2 nécessite la fabrication initiale d'un transpondeur radiofréquence 1, 5 selon l'invention. Les diverses étapes chronologiques de la fabrication du transpondeur radiofréquence 1, 5 puis celles du patch d'identification 2 sont identifiées. On délimite nettement les étapes liées aux métiers des télécommunications ou de l'électronique de celles de l'assemblage qui peut être réalisé par le manufacturier pneumatique par exemple pour une application sur des bandages pneumatiques.

En s'appuyant sur la figure 7 représentant un synoptique de fabrication d'un patch d'identification 2, on distingue trois phases indépendantes et successives.

Dans une première phase, correspondant au métier des télécommunications, on constitue l'antenne rayonnante 10 qui assurera la transmission et la réception des ondes radioélectriques avec le lecteur radiofréquence.

Selon un mode de réalisation spécifique, la première étape consiste à déformer plastiquement le fil d'acier 12 de diamètre externe de 200 micromètres pour former un ressort hélicoïdal avec un pas d'hélice de 1,5mm à l'aide de moyens industriels adaptés tel qu'un tour à enrouler les ressorts. On obtient ainsi un ressort continu dont le diamètre externe 15 est de l'ordre de 1,6 millimètres qui est petit vis-à-vis de la longueur 17 de l'antenne rayonnante finale comprise entre 40 à 60 millimètres que l'on souhaite, par exemple 50 millimètres. Un traitement thermique peut être appliqué après cette étape de déformation plastique, chauffage supérieure à 200°Celsius pendant au moins 30 minutes, afin de relaxer les précontraintes dans le ressort hélicoïdal ainsi formé.

La seconde étape consiste à sectionner le ressort hélicoïdal par découpe laser à la longueur souhaitée correspondant à la demi longueur d'onde de la fréquence des signaux radioélectriques de communication en tenant compte de la vitesse de propagation de ces ondes dans un milieu élastomère, soit environ 50 millimètres. La pièce mécanique ainsi obtenue représente l'antenne rayonnante 10 selon l'invention.

Dans une deuxième phase, on réalise la partie électronique 20 du transpondeur radiofréquence 1, qui assurera l'interrogation et la réponse de la puce électronique 22 vers l'antenne rayonnante 10. La transmission d'information entre l'antenne rayonnante 10 et la partie électronique 20 est réalisée par couplage électromagnétique à l'aide d'une antenne primaire 24.

Ce dispositif électronique, encapsulé dans la masse rigide 29, est composé d'une part d'une puce électronique 22 et d'autre part d'une antenne primaire 24.

Un premier mode de réalisation de ce dispositif électronique est présenté à la figure 3 dans la configuration où la partie électronique 20 est destinée à se situer à l'intérieur de l'antenne rayonnante 10. Dans un mode de réalisation préférentielle, on emploie le procédé leadframe en terme de support électro mécanique à l'antenne primaire 24 et à la puce électronique 22 représentant l'équivalent d'un circuit imprimé 26. Ce procédé est particulièrement bien adapté dans cette configuration en raison de sa facilité de miniaturisation.

La première étape consiste à composer la carte électronique. Pour cela on fixe, en premier lieu, sur la grille ou leadframe la puce électronique 22 à l'aide d'une colle conductrice par exemple la H20E de la marque Tedella. Et le câblage de la puce est effectué par la technique de wire-bonding, c'est à-dire la réalisation d'un pont électrique par l'intermédiaire, par exemple, de fils 28 en or de diamètre 20 micromètres entre la puce électronique 22 et le circuit imprimé 26 représenté par la grille. On peut alors mesurer l'impédance électrique de la carte électronique aux points de fixation de l'antenne primaire 24 sur la grille à l'aide d'un appareil électrique adaptée comme un impédancemètre.

La deuxième étape consiste à réaliser l'antenne primaire 24. Dans un mode de réalisation non représenté dans les figures annexées, cette antenne sera constituée d'une bobine à spires circulaires construite directement sur la grille (lead frame) par la technologie du câblage de fil (wire-bonding). Une autre variante d'antenne primaire, non illustrée, consiste à créer une antenne à l'aide de deux segments filaires de cuivre connectés à la carte électronique au moyen d'une technique de soudure métallique employée dans l'industrie électronique et orientés dans des directions opposées pour former un dipôle. Pour la construction de la bobine à spire sur la grille, un fil d'or de 20 micromètre de diamètre sera employé, on aurait pu employer aussi du fil d'aluminium ou de cuivre palladium, pour réaliser les demi-spires de la bobine sur la face verso de la grille. Le diamètre de la demi spire est de 400 micromètres, on emploie la technique des ultrasons classique dans l'industrie des semi-conducteurs pour connecter électriquement les fils d'or sur la grille. Ensuite sur la face recto de la grille, on réalise l'autre demi spire afin d'obtenir une bobine cylindrique à 15 spires de diamètre 400 micromètres.

Le nombre de spires de l'antenne primaire 24 est déterminé de telle sorte que l'impédance électrique de l'antenne primaire 24 soit adaptée à l'impédance électrique de la carte électronique comprenant au moins le circuit imprimé 26 représenté par la grille et la puce électronique 22. Dans notre cas, l'impédance électrique de la puce électronique 22 seule est un nombre complexe ayant une valeur par exemple de (10-j*150) ohms. Ainsi une bobine de 15 spires de diamètre 400 micromètres correspond à une bonne adaptation de l'impédance électrique de la carte électronique construite sur une grille de connexions en cuivre.

La dernière étape de réalisation de la partie électronique 20 consiste à encapsuler le circuit imprimé 26, les composants qui lui sont connectés et l'antenne primaire 24 à l'aide d'une résine époxy haute température, dans une masse rigide 29. Pour cela, on utilise la technologie du globtop bien connue d'un homme du métier. La masse rigide 29 forme une capsule protégeant la carte électronique du transpondeur radiofréquence 1.

Dans un autre mode de réalisation du dispositif électronique destiné à être placé à l'intérieur de l'antenne rayonnante 10, on commence tout d'abord par la réalisation de l'antenne primaire 24 à l'aide d'un fil de cuivre de 180 micromètre revêtu d'une gaine thermoplastique isolante électriquement. On enroule ce fil sur un noyau tubulaire rigide et isolant électriquement en réalisant une bobine d'une dizaine de spires de diamètre extérieur de 1millimètre avec un pas d'hélice de 0,2 millimètre se terminant par deux extrémités non revêtues. Il est alors possible d'évaluer la surface périphérique réelle s de l'antenne primaire 24 à l'aide du diamètre du fil de cuivre, du diamètre extérieur de l'antenne, du pas d'hélice et du nombre total de spires. Dans ce cas, le rayon de la surface hélicoïdale est de 500 micromètres puisque l'antenne primaire 24 est située à l'intérieur de l'antenne rayonante 10.

On réalise la carte électronique à l'aide d'un support flexible. Dans une première variante, la puce électronique 22 est fixée à l'aide d'une colle conductrice de type ACP (acronyme Anisotropic Conductive Paste) ne necessitant pas de cablage électrique entre la puce 22 et la carte électronique. Dans une seconde variante, la puce électronique 22 est fixée à l'aide d'une colle non conductrice de montage de composants électroniques. Le câblage de la puce 22 à la carte électtronique est effectué par la technique de wire-bonding, c'est à-dire la réalisation d'un pont électrique par l'intermédiaire, par exemple, de fils 28 en or de diamètre 20 micromètres positionnés entre la puce électronique 22 et le support flexible représentant le circuit imprimé 26..

Ensuite on connecte les deux extrémités non revêtues de l'antenne primaire 24 au circuit imprimé 26 en urilisant une colle conductrice par exemple la H20E de la marque Tedella.

Enfin on recouvre la carte électronique et les terminaisons non revêtues de l'antenne primaire 24 par un matériau rigide et isolant électriquement de type résine époxy haute température par la technique globtop bien connu des hommes du métier.

Dans un second mode de réalisation de la partie électronique 30 lorsque celle-ci est destinée à se situer à l'extérieur de l'antenne rayonnante 10, on procède de la manière suivante. On réalise en premier lieu une partie de la carte électronique.

Dans une première étape, on connecte par la technique des ultrasons classique de l'industrie microélectronique sur un support flexible constituant le circuit imprimé 36 (traduction en anglais « flex PCB ») une puce électronique 32 et éventuellement des composants additionnels afin de composer la carte électronique. On mesure l'impédance électrique de la carte électronique par l'intermédiaire d'un appareillage électrique adapté tel un impédancemètre aux bornes des connexions en cuivre sur la face du dessus du circuit imprimé flexible où sera connectée l'antenne primaire. Chacune des connexions en cuivre présente une cavité centrale traversant l'épaisseur du support flexible jusqu'à la face du dessous du support.

Dans une deuxième étape, l'antenne primaire 34 est réalisée autour d'un tube 37 en résine isolante électriquement dont le diamètre intérieur, délimitant la cavité cylindrique 35 de la partie électronique, est supérieur ou égal au diamètre externe 15 du ressort hélicoïdal de l'antenne rayonnante 10 soit de l'ordre de 1,3 millimètres. L'épaisseur de ce tube est d'environ 0,5 millimètre. Chaque extrémité du tube présente une surépaisseur de 0,5 millimètre constituant un rebord 38 de largeur inférieure ou égale à 0,5 millimètre.

On enroule un fil de cuivre de diamètre 200 micromètres sur la face externe du tube 37, entre les deux rebords 38, afin de constituer un nombre donné de spires ce qui permet de réaliser une antenne primaire 34 sous la forme d'une bobine cylindrique ayant une impédance électrique adaptée à l'impédance de la carte électronique à laquelle elle sera électriquement connectée.

On fixe le circuit imprimé 36 flexible de la carte électronique réalisé à la première étape sur les rebords 38 du tube 37 en résine isolante à l'aide d'une colle conductrice de type H20E de la marque Tedella .Préalablement on a inséré chacune des extrémités du fil de cuivre de l'antenne primaire 34 entre un rebord 38 du tube 37 et le circuit imprimé 36 flexible, les deux parties à assembler.

Enfin on réalise une connexion électrique par brasage d'un métal conducteur de type cuivre au travers de la cavité traversant le circuit imprimé 36 flexible au niveau des connexions en cuivre. Ainsi le dispositif électronique constitué de la carte électronique et de l'antenne primaire 34 est réalisé.

Lors de la dernière étape, on revêt le dispositif électronique d'une masse rigide 39 isolante électriquement sur une épaisseur d'au moins 1 millimètre afin de protéger la carte électronique et l'antenne primaire 34 des agressions chimiques diverses et protéger mécaniquement les connexions électriques. Une technique d'injection est employée consistant à positionner le dispositif électronique dans un moule. Cependant pour préserver la cavité cylindrique 35 du tube initial en résine, on place une membrane souple et imperméable à l'air en élastomère traversant la cavité cylindrique 35 que l'on met sous pression pour rendre hermétique cette cavité cylindrique 35 à la propagation de la résine de protection. L'injection sous pression, à une pression inférieure à celle de la membrane imperméable, à l'état liquide d'une résine époxy à haute température, comme la résine RESOLCOAT 1060ES7 de la marque RESOLTECH, est effectuée. Ce procédé permet une diffusion homogène de la résine sur l'ensemble du dispositif électronique à l'exception de la cavité cylindrique 35. Après l'ouverture du moule et l'arrêt de la mise sous pression de la membrane souple, on extrait le dispositif électronique présentant toujours la cavité cylindrique 35 mais cette fois ci revêtu extérieurement d'une masse rigide 39 en résine isolante électriquement. L'ensemble représente la partie électronique 30 du transpondeur radio fréquence 5.

La troisième phase de la réalisation du transpondeur radio fréquence 1 ou 5 consiste à assembler l'antenne rayonnante 10 réalisée à la première étape à la partie électronique 20 ou 30 réalisée à la deuxième étape.

Dans une première configuration où l'antenne primaire 24 est destinée à se situer à l'intérieur de l'antenne rayonnante 10, on procède de la manière suivante.

Tout d'abord on saisit à l'aide d'une pince à long bec adaptée la partie électronique 20 inscrite dans un cylindre dans le diamètre est inférieur ou égal au diamètre interne 13 de l'antenne rayonnante 10 réalisée à la première étape, soit de l'ordre du millimètre.

On insère la partie électronique 20 à l'intérieur de l'antenne rayonnante 10 en positionnant l'axe de symétrie 23 de l'antenne primaire dans la direction de l'axe de révolution 11 de l'antenne rayonnante 10. De plus, on enfonce la partie électronique 20 dans l'antenne rayonnante 10 jusqu'à ce que le plan médian 21 de l'antenne primaire coïncide avec le plan médian 19 de l'antenne rayonnante. Ensuite on libère la partie électronique 20 de la pince à long bec et retire délicatement la pince de l'intérieur de l'antenne rayonnante 10.

Un auto centrage, parallélisme des axes et position relative des plans médians entre l'antenne rayonnante 10 et l'antenne primaire 24, est ainsi réalisé favorable à un couplage inductif de qualité entre les deux antennes.

L'ensemble ainsi constitué représente un transpondeur radiofréquence 1 selon l'invention.

Dans une seconde configuration où la partie électronique 30 est destinée à se situer à l'extérieur de l'antenne rayonnante 10, on procède de la manière suivante.

On fixe l'extérieur de la partie électronique 30 réalisée à la deuxième phase à l'aide par exemple d'un étau. On saisit l'antenne rayonnante 10 réalisée lors de la première phase à l'aide d'une pince à long bec par une de ses extrémités.

On insère alors l'autre extrémité de l'antenne rayonnante 10 dans la cavité cylindrique 35 de la partie électronique 30 et on guide à l'aide de la pince à long bec l'antenne rayonnante 10 au travers de la cavité cylindrique 35 jusqu' à ce que le plan médian 19 de l'antenne rayonnante 10 coïncide avec le plan médian de l'antenne primaire 34.

On libère alors l'antenne rayonnante 10 par l'ouverture des extrémités de la pince à long bec. L'ensemble ainsi constitué représente un transpondeur radio fréquence 5 selon l'invention.

La dernière étape, une fois le transpondeur radiofréquence 1 ou 5 réalisé est l'obtention d'un patch d'identification 2 pour faciliter une mise en application du transpondeur radiofréquence 1 ou 5 dans des objets à identifier en partie constitués par des mélanges élastomères. Quelle que soit la configuration du transpondeur radiofréquence 1 ou 5, on procède de la façon suivante pour cette étape.

On place le transpondeur radiofréquence 1 ou 5 constitué à l'étape précédente au centre d'une masse souple 3. Comme par exemple illustré dans la figure 5, le transpondeur radiofréquence 1 est pris en sandwich entre deux plaques 3a et 3b en matériau élastomère cru de dimensions fonction de celle du transpondeur radiofréquence 1 et une épaisseur comprise par exemple entre 2 et 5 millimètres. La direction longitudinale des plaques correspond à l'axe de l'antenne rayonnante 10. L'ensemble se situe au préalable sur la face interne d'une matrice métallique d'un outil de presse de dimension adaptée au volume de masse élastomère.

On applique à l'aide d'un poinçon métallique complémentaire de la matrice , un effort de compression au moyen d'un outil de presse, par exemple une presse uni axiale pneumatique, à l'ensemble afin de former une géométrie compacte présentant un axe de symétrie, de longueur par exemple de 60 millimètres, inscrit dans un cylindre de diamètre d'environ 20 millimètres correspondant à un patch d'identification 2 du transpondeur radiofréquence 1 ou 5 selon l'invention.

D'autres procédés peuvent être employés pour incorporer le transpondeur radiofréquence 1, 5 au sein d'une masse d'un ou plusieurs mélanges élastomères comme par exemple le procédé d'extrusion ou d'injection.

Dans un mode de réalisation particulier, on emploie des promoteurs d'adhésion bien connus de l'homme du métier entre la masse rigide 29, 39 en résine époxy haute température encapsulant la partie électronique 20, 30 du transpondeur radiofréquence 1,5 et le mélange élastomère du patch d'identification 2. Cela peut améliorer l'endurance du transpondeur radiofréquence en service.

Finalement, la mise en œuvre industrielle d'un transpondeur radiofréquence 1, 5 selon l'invention pour un objet à identifier tel un bandage pneumatique peut être effectuée selon au moins deux modes de réalisation. Dans un premier mode de réalisation préférentielle, il suffit d'incorporer le transpondeur radiofréquence 1, 5 ou le patch d'identification 2 en mélange élastomère cru dans l'ébauche du pneumatique lors de la confection du bandage pneumatique. On place géométriquement le transpondeur ou le patch d'identification 2 entre les divers composants élastomères de l'ébauche crue du bandage pneumatique. Idéalement, il est placé dans une zone géographique subissant des niveaux de déformations acceptables pour que l'antenne rayonnante 10 ne soit pas déformée plastiquement. L'ébauche subit les diverses phases de fabrication du pneumatique dont la cuisson en autoclave vulcanisant les différents mélanges élastomères et rendant solidaire le transpondeur ou le patch d'identification du bandage pneumatique ainsi réalisé. Le transpondeur radiofréquence 1, 5 est alors prêt à l'emploi.

Un autre mode de réalisation préférentielle consiste à figer la structure élastomère du patch d'identification 2 par réticulation ou vulcanisation au cours d'une étape postérieure à la fabrication du patch d'identification 2. Le dispositif obtenu à la suite de cette opération est fixé sur une zone d'accueil du bandage pneumatique par une technique classique de fixation élastomère/élastomère connue de l'homme du métier comme par exemple l'adhésion par réticulation à froid d'une couche de gomme de liaison sur.la gomme intérieure du bandage pneumatique Le transpondeur radiofréquence 1, 5 du pneumatique est alors prêt à l'emploi.

## Revendications

1. Transpondeur radio fréquence (1, 5) destiné à être intégré à un objet à identifier constitué d'un mélange ou composition élastomère, comprenant :
- une puce électronique (22, 32),
- une antenne rayonnante (10) communiquant avec un lecteur radiofréquence étant déconnecté de tout circuit imprimé,
**caractérisé en ce que** ledit transpondeur radiofréquence (1, 5) comporte en plus une antenne primaire (24, 34) connectée électriquement à la puce électronique (22, 32) et qui est une bobine possédant au moins une spire, **en ce que** l'antenne primaire (24, 34) est couplée inductivement à l'antenne rayonnante (10), **en ce que** l'antenne rayonnante (10) est une antenne dipôle constituée d'un ressort hélicoïdal mono brin, **et en ce que,** l'antenne primaire (24,34) ayant un axe de symétrie (23), est circonscrite dans un cylindre dont l'axe de révolution est parallèle à l'axe de symétrie (23) de l'antenne primaire (24, 34) et dont le diamètre est supérieur ou égal au tiers du diamètre intérieur (13) du ressort hélicoïdal de l'antenne rayonnante (10).

2. Transpondeur radio fréquence (1, 5) selon la revendication 1, dans lequel, l'antenne primaire (24, 34) ayant un axe de symétrie (23), ledit axe de symétrie (23) de l'antenne primaire (24, 34) et l'axe de révolution (11) de l'antenne rayonnante (10) sont sensiblement parallèles.

3. Transpondeur radiofréquence (1, 5) selon l'une des revendications 1 à 2, dans lequel le plan médian (21) de la bobine de ladite antenne primaire (24, 34) est sensiblement superposé au plan médian (19) du ressort hélicoïdal de ladite antenne rayonnante (10).

4. Transpondeur radiofréquence (1, 5) selon l'une quelconque des revendications précédentes, dans lequel, l'antenne primaire (24, 34) étant connectée aux bornes d'une carte électronique comprenant ladite puce électronique (22, 32), l'impédance électrique de l'antenne primaire (24, 34) est adaptée à l'impédance électrique de la carte électronique dudit transpondeur radio fréquence (1, 5).

5. Transpondeur radiofréquence (1, 5) selon l'une des revendications 1 à 4, dans lequel la puce électronique (22, 32) et au moins une partie de l'antenne primaire (24, 34) sont noyées dans un masse rigide (29, 39) et isolante électriquement pour constituer la partie électronique (20, 30) dudit transpondeur radiofréquence (1, 5).

6. Transpondeur radiofréquence (1, 5) selon la revendication 5 dans lequel la au moins une partie de l'antenne primaire (24, 34) non noyée dans la masse rigide (29,39) est revêtue d'un matériau isolant électriquement.

7. Transpondeur radiofréquence (1, 5) selon l'une des revendications de 5 à 6, dans lequel la partie électronique (20) dudit transpondeur radiofréquence (1) est située à l'intérieur de l'antenne rayonnante (10).

8. Transpondeur radiofréquence (1, 5) selon la revendication 7 dans lequel la géométrie de la partie électronique (20) dudit transpondeur radiofréquence (1) est inscrite dans un cylindre dont le diamètre est inférieur ou égal au diamètre intérieur (13) de l'antenne rayonnante (10) et dont l'axe de révolution est parallèle ou coaxial relativement à l'axe de symétrie (23) de l'antenne primaire (24).

9. Transpondeur radiofréquence (5) selon l'une des revendications 5 à 6, dans lequel la partie électronique (30) dudit transpondeur radiofréquence (5) est située à l'extérieur de l'antenne rayonnante (10).

10. Transpondeur radiofréquence (5) selon la revendication 9 dans lequel le diamètre du cercle inscrit dans l'antenne primaire (34) est inférieur à trois fois le diamètre extérieur (15) de l'antenne rayonnante (10).

11. Transpondeur radiofréquence (1, 5) selon l'une des revendications 1 à 10, dans lequel, la puce électronique (22, 32) étant connectée électriquement à un circuit imprimé (26, 36) pour constituer la carte électronique, ledit circuit imprimé (26, 36) comporte un ou plusieurs composants électroniques passifs ou actifs additionnels.

12. Patch d'identification (2) comportant un transpondeur radio fréquence (1, 5) selon l'une quelconque des revendications précédentes, dans lequel le transpondeur radiofréquence (1, 5) est noyé dans au moins un mélange élastomère (3) souple et isolant électriquement.

13. Enveloppe pneumatique comportant un patch d'identification (2) selon la revendication 12 dans laquelle le patch d'identification (2) est incorporé à ladite enveloppe pneumatique.

14. Procédé de fabrication d'un transpondeur radiofréquence (1, 5) dans lequel :
- on réalise un ressort hélicoïdal de dimension adaptée à la fréquence de communication du signal radioélectrique du transpondeur radiofréquence (1) afin de constituer l'antenne rayonnante (10) dudit transpondeur radiofréquence (1),
- on connecte électriquement une puce électronique (22, 32) sur un circuit imprimé (26, 36) afin de constituer une carte électronique,
- on réalise à l'aide d'un fil conducteur une antenne primaire (24, 34),
- on connecte électriquement l'antenne primaire (24, 34) à la carte électronique,
- on noie au moins une partie de l'antenne primaire (24, 34) et la carte électronique dans une masse rigide (29, 39) et isolante électriquement telle une résine thermodurcissable afin de constituer la partie électronique (20, 30) dudit transpondeur radiofréquence (1, 5),
- on positionne par simple enfilement la partie électronique (20, 30) et l'antenne rayonnante (10) de telle façon que, l'antenne primaire (24, 34) possédant un axe de symétrie (23) et un plan médian (21) et l'antenne rayonnante (10) un axe de révolution (11) et un plan médian (19), les axes des deux antennes sont sensiblement parallèles, et les plans médians des deux antennes sont sensiblement superposés.

15. Procédé de fabrication d'un patch d'identification (2) dans lequel un transpondeur radiofréquence (1, 5) selon l'une des revendications de 1 à 11 étant réalisé selon la revendication 14, ledit transpordeur radiofréquence (1 ;5) est incorporé dans une masse d'au moins un mélange élastomère souple (3) et isolante électriquement par un procédé d'injection, d'extrusion ou de compression.

## Patentansprüche

1. Hochfrequenztransponder (1, 5), der dazu bestimmt ist, in ein zu kennzeichnendes Objekt, das aus einer Elastomermischung oder -zusammensetzung besteht, integriert zu werden, umfassend:
- einen elektronischen Chip (22, 32),
- eine abstrahlende Antenne (10), die mit einem Hochfrequenz-Lesegerät kommuniziert, das von jeglicher gedruckten Schaltung getrennt ist,
**dadurch gekennzeichnet, dass** der Hochfrequenztransponder (1, 5) zudem eine Primärantenne (24, 34) umfasst, die elektrisch mit dem elektronischen Chip (22, 32) verbunden ist und die eine Spule mit mindestens einer Windung ist,
dass die Primärantenne (24, 34) induktiv mit der abstrahlenden Antenne (10) gekoppelt ist, dass die abstrahlende Antenne (10) eine Dipolantenne ist, die aus einer einsträngigen Spiralfeder besteht, und dass die Primärantenne (24, 34), die eine Symmetrieachse (23) aufweist, in einem Zylinder begrenzt ist, dessen Drehachse parallel zur Symmetrieachse (23) der Primärantenne (24, 34) ist und dessen Durchmesser größer oder gleich dem Drittel des Innendurchmessers (13) der Spiralfeder der abstrahlenden Antenne (10) ist.

2. Hochfrequenztransponder (1, 5) nach Anspruch 1, wobei die Primärantenne (24, 34) eine Symmetrieachse (23) aufweist, wobei die Symmetrieachse (23) der Primärantenne (24, 34) und die Drehachse (11) der abstrahlenden Antenne (10) im Wesentlichen parallel sind.

3. Hochfrequenztransponder (1, 5) nach einem der Ansprüche 1 bis 2, wobei die Mittelebene (21) der Spule der Primärantenne (24, 34) im Wesentlichen der Mittelebene (19) der Spiralfeder der abstrahlenden Antenne (10) überlagert ist.

4. Hochfrequenztransponder (1, 5) nach einem der vorhergehenden Ansprüche, wobei die Primärantenne (24, 34) mit den Anschlüssen einer elektronischen Platine verbunden ist, die den elektronischen Chip (22, 32) umfasst, und die elektrische Impedanz der Primärantenne (24, 34) der elektrischen Impedanz der elektronischen Platine des Hochfrequenztransponders (1, 5) angepasst ist.

5. Hochfrequenztransponder (1, 5) nach einem der Ansprüche 1 bis 4, wobei der elektronische Chip (22, 32) und mindestens ein Teil der Primärantenne (24, 34) in eine starre und elektrisch isolierende Masse (29, 39) eingegossen sind, um den elektronischen Teil (20, 30) des Hochfrequenztransponders (1, 5) zu bilden.

6. Hochfrequenztransponder (1, 5) nach Anspruch 5, wobei mindestens ein Teil der Primärantenne (24, 34), der nicht in die starre Masse (29, 39) eingegossen ist, mit einem elektrisch isolierenden Material verkleidet ist.

7. Hochfrequenztransponder (1, 5) nach einem der Ansprüche 5 bis 6, wobei sich der elektronische Teil (20) des Hochfrequenztransponders (1) im Inneren der abstrahlenden Antenne (10) befindet.

8. Hochfrequenztransponder (1, 5) nach Anspruch 7, wobei die Geometrie des elektronischen Teils (20) des Hochfrequenztransponders (1) in einem Zylinder enthalten ist, dessen Durchmesser kleiner oder gleich dem Innendurchmesser (13) der abstrahlenden Antenne (10) ist und dessen Drehachse parallel oder koaxial zur Symmetrieachse (23) der Primärantenne (24) ist.

9. Hochfrequenztransponder (5) nach einem der Ansprüche 5 bis 6, wobei sich der elektronische Teil (30) des Hochfrequenztransponders (5) außerhalb der abstrahlenden Antenne (10) befindet.

10. Hochfrequenztransponder (5) nach Anspruch 9, wobei der Durchmesser des Kreises, der in der Primärantenne (34) enthalten ist, kleiner als der dreifache Außendurchmesser (15) der abstrahlenden Antenne (10) ist.

11. Hochfrequenztransponder (1, 5) nach einem der Ansprüche 1 bis 10, wobei der elektronische Chip (22, 32) elektrisch mit einer gedruckten Schaltung (26, 36) verbunden ist, um die elektronische Platine zu bilden und die gedruckte Schaltung (26, 36) eine oder mehrere zusätzliche passive oder aktive elektronische Bauelemente umfasst.

12. Kennzeichnungspatch (2), umfassend einen Hochfrequenztransponder (1, 5) nach einem der vorhergehenden Ansprüche, wobei der Hochfrequenztransponder (1, 5) in mindestens eine weiche und elektrisch isolierende Elastomermischung (3) eingegossen ist.

13. Reifenmantel, umfassend ein Kennzeichnungspatch (2) nach Anspruch 12, wobei das Kennzeichnungspatch (2) im Reifenmantel eingebettet ist.

14. Verfahren zur Herstellung eines Hochfrequenztransponders (1, 5), wobei:
- eine Spiralfeder mit einer Abmessung hergestellt wird, die der Kommunikationsfrequenz des Funksignals des Hochfrequenztransponders (1) angepasst ist, um die abstrahlende Antenne (10) des Hochfrequenztransponders (1) zu bilden,
- ein elektronischer Chip (22, 32) auf einer gedruckten Schaltung (26, 36) angeschlossen wird, um eine elektronische Platine zu bilden,
- mithilfe eines leitfähigen Drahts eine Primärantenne (24, 34) hergestellt wird,
- die Primärantenne (24, 34) mit der elektronischen Platine verbunden wird,
- mindestens ein Teil der Primärantenne (24, 34) und die elektronische Platine in eine starre und elektrisch isolierende Masse (29, 39) wie etwa wärmehärtbares Harz eingegossen wird, um den elektronischen Teil (20, 30) des Hochfrequenztransponders (1, 5) zu bilden,
- durch einfaches Einschieben der elektronische Teil (20, 30) und die abstrahlende Antenne (10) so positioniert werden, dass die Achsen der beiden Antennen im Wesentlichen parallel sind und die Mittelebenen der beiden Antennen im Wesentlichen überlagert sind, da die Primärantenne (24, 34) eine Symmetrieachse (23) und eine Mittelebene (21) aufweist und die abstrahlende Antenne (10) eine Drehachse (11) und eine Mittelebene (19) aufweist.

15. Verfahren zur Herstellung eines Kennzeichnungspatches (2), wobei ein Hochfrequenztransponder (1, 5) nach einem der Ansprüche 1 bis 11 nach Anspruch 14 hergestellt wird, wobei der Hochfrequenztransponder (1, 5) durch ein Einspritz-, Extrusions- oder Kompressionsverfahren in eine Masse von mindestens einer weichen und elektrisch isolierenden Elastomermischung (3) eingebettet wird.

## Claims

1. Radiofrequency transponder (1, 5) intended to be integrated in a mass of elastomer mixture, comprising:
- an electronic chip (22, 32),
- a radiating antenna (10) communicating with a radiofrequency reader, being disconnected to any printed circuit
**characterized in that** said radiofrequency transponder (1, 5) further a primary antenna (24, 34) connected electrically to the electronic chip (22, 32) which is a coil having at least one turn, **in that** the primary antenna (24, 34) is inductively coupled to the radiating antenna (10), and **in that** the radiating antenna (10) is a dipole antenna formed by a single-strand helical spring and **in that** the primary antenna (24, 34), having an axis of symmetry (23), is circumscribed in a cylinder whose axis of revolution is parallel to the axis of symmetry (23) of the primary antenna (24, 34), and whose diameter is greater than or equal to a third of the inside diameter (13) of the helical spring of the radiating antenna (10).

2. Radiofrequency transponder (1, 5) according to Claim 1, wherein, the primary antenna (24, 34) having an axis of symmetry (23), said axis of symmetry (23) of the primary antenna (24, 34) and the axis of revolution (11) of the radiating antenna (10) are substantially parallel.

3. Radiofrequency transponder (1, 5) according to any of Claims 1 to 2, wherein the mid-plane (21) of the coil of said primary antenna (24, 34) is substantially superimposed on the mid-plane (19) of the helical spring of said radiating antenna (10).

4. Radiofrequency transponder (1, 5) according to any of the preceding Claims, wherein, the primary antenna (24, 34) being connected to the terminals of an electronic circuit card comprising said electronic chip (22, 32), the impedance of the primary antenna (24, 34) is adapted to the impedance of the electronic circuit card of said radiofrequency transponder (1, 5).

5. Radiofrequency transponder (1, 5) as claimed in any of Claims 1 to 4, wherein the electronic chip (22, 32) and at least a part of the primary antenna (24, 34) are embedded in a rigid, electrically insulating mass (29, 39) to form the electronic part (20, 30) of said radiofrequency transponder (1, 5).

6. Radiofrequency transponder (1, 5) according to Claim 5, wherein the at least one part of the primary antenna (24, 34) not embedded in the rigid mass (29, 39) is covered with an electrically insulating material.

7. Radiofrequency transponder (1, 5) according to any of Claims 5 to 6, wherein the electronic part (20) of said radiofrequency transponder (1) is located inside the radiating antenna (10).

8. Radiofrequency transponder (1, 5) according to Claim 7, wherein the geometry of the electronic part (20) of said radiofrequency transponder (1) is inscribed in a cylinder whose diameter is less than or equal to the inside diameter (13) of the radiating antenna (10), and whose axis of revolution is parallel to, or coaxial with, the axis of symmetry (23) of the primary antenna (24).

9. Radiofrequency transponder (5) according to any of Claims 5 to 6, wherein the electronic part (30) of said radiofrequency transponder (5) is located outside the radiating antenna (10).

10. Radiofrequency transponder (5) according to Claim 9, wherein the diameter of the circle inscribed in the primary antenna (34) is less than three times the outside diameter (15) of the radiating antenna (10).

11. Radiofrequency transponder (1, 5) according to any of Claims 1 to 10, wherein, the electronic chip (22, 32) being electrically connected to a printed circuit (26, 36) to form the electronic circuit card, said printed circuit (26, 36) comprises one or more additional passive or active electronic components.

12. Identification patch (2) comprising a radiofrequency transponder (1, 5) according to any of the preceding claims, wherein the radiofrequency transponder (1, 5) is embedded in at least one electrically insulating flexible elastomer mixture (3).

13. Tyre casing comprissing an identification patch according to the Claim 12 in which the identification patch is incorporated to the said tyre casing.

14. Method for manufacturing a radiofrequency transponder (1, 5), wherein:
- a helical spring of a size adapted to the communication frequency of the radio signal of the radiofrequency transponder (1) is produced, to form the radiating antenna (10) of the radiofrequency transponder (1),
- an electronic chip (22, 32) is electrically connected to a printed circuit (26, 36), to form an electronic circuit card,
- a primary antenna (24, 34) is made, using a conductive wire,
- the primary antenna (24, 34) is electrically connected to the electronic circuit card,
- at least a part of the primary antenna (24, 34) and the electronic circuit card is embedded in a rigid, electrically insulating mass (29, 39) such as a thermosetting resin, to form the electronic part (20, 30) of said radiofrequency transponder (1, 5),
- the electronic part (20, 30) and the radiating antenna (10) are positioned by a simple insertion process in such a way that, the primary antenna (24, 34) having an axis of symmetry (23) and a mid-plane (21) and the radiating antenna (10) having an axis of revolution (11) and a mid-plane (19), the axes of the two antennas are substantially parallel and the mid-planes of the two antennas are substantially superimposed.

15. Method for manufacturing an identification patch (2), wherein a radiofrequency transponder (1, 5) according to any of Claims 1 to 11 is incorporated in a flexible, electrically insulating mass (3) of at least one elastomer mixture, by a process of injection, extrusion or compression.
